# EUROPEAN PATENT SPECIFICATION

(11) **EP 1 371 295 B1**
(45) Date of publication and mention of the grant of the patent: **28.05.2008**
(21) Application number: 03013119.7
(22) Date of filing: 11.06.2003
(51) Int. Cl.: A23L 1/305, A23L 1/105, A23C 11/02, A23C 11/10, A23L 1/29, A23L 2/66

(54) **Rice-based food product and method for making it**
Lebensmittel auf Reis basis und Herstellungsverfahren
Alimentation à base de riz et procédé pour sa préparation

(30) Priority: 12.06.2002 IT MI20021300
(43) Date of publication of application: 17.12.2003
(73) Proprietor: Bartocci, Ezio, 29100 Piacenza (IT); De Luigi, Mario, 29017 Fiorenzuola d'Arda (Piacenza) (IT)
(72) Inventor: Bartocci, Ezio, 29100 Piacenza (IT); De Luigi, Mario, 29017 Fiorenzuola d'Arda (Piacenza) (IT)
(74) Representative: Cicogna, Franco

(56) References cited:
- EP-A- 0 407 981
- EP-A- 0 970 614
- EP-A- 1 070 457
- EP-A- 1 198 991
- US-A- 4 894 242
- US-A- 5 609 895
- US-A- 5 753 283
- GUERRA M J ET AL: "Formulation of a high-nutritional value beverage based on rice." ARCHIVOS LATINOAMERICANOS DE NUTRICION 1981 UNIV. SIMON BOLIVAR, CARACAS, VENEZUELA, vol. 31, no. 2, pages 337-349, XP009023462
- DATABASE FSTA [Online] INTERNATIONAL FOOD INFORMATION SERVICE (IFIS), FRANFURT/MAIN, DE; CHANG K C ET AL: "Production and nutritional evaluation of high-protein rice flour." Database accession no. 86-4-08-m0091 XP002265962 & JOURNAL OF FOOD SCIENCE 1986 FOOD & NUTR. DEP., N. DAKOTA STATE UNIV., FARGO, N. DAKOTA 58105, USA, vol. 51, no. 2, pages 464-467,
- ESPINOZA J ET AL: "RICE-BASED FORMULAS FOR RAPID REFEEDING OF INFANTS WITH ACUTE DIARRHOEA. A FIELD TRIAL" INTERNATIONAL JOURNAL OF FOOD SCIENCES AND NUTRITION, CARFAX PUBLISHING LTD, GB, vol. 43, no. 3, 1992, pages 139-146, XP000993047 ISSN: 0963-7486
- DATABASE WPI Section Ch, Week 198712 Derwent Publications Ltd., London, GB; Class D13, AN 1987-084110 XP002265963 & JP 62 036169 A (WABIMA M), 17 February 1987 (1987-02-17) & PATENT ABSTRACTS OF JAPAN & JP 62 036169 A (WABIMA M), 17 February 1987 (1987-02-17)

## Description

### BACKGROUND OF THE INVENTION

The present invention relates to a rice-based food product, which has been specifically designed for human feeding.

More specifically, the invention relates to a so-called rice-milk, which has been specifically designed for providing a whole nourishing food product, i.e. suitable to provide all the macronourishing substances such as carbohydrates, proteins and fats, necessary for a healthy and equilibrated human feeding.

In recent years, through the overall world, the need of having healthy, easily digestible food products, suitable for all persons is greatly increased.

For example, it is known that third-world people cannot tolerate lactose.

Such an intolerance, in particular milk and soybean protein intolerance, moreover, is increasing also in occidental countries.

Thus, it would be greatly advantageous to provide food products, of vegetable origin, rich in complex carbohydrates, unsaturated fats and proteins, greatly efficient from the nutritional standpoint.

In this connection it should be pointed out that the sole alternative, related to vegetable protein rich food products, has been up to now soybean which, however, is affected by the problem of a comparatively high digestive intolerance, also due to the fact that soybean is frequently a genetically modified one.

In particular, soybean milk and other cereal based drinks or beverages are to be considered as unbalanced from a nutritional standpoint; actually soybean milk does not comprise a sufficient amount of carbohydrates, whereas other available cereal based drinks, in particular based on rice and oats, have insufficient protein and fat contents.

Accordingly, and as stated, it would be very advantageous to provide a food product suitable for the world populations, in particular for persons who, for different reasons, such as biologic intolerance, religious and ideologic ties, sub-nourishing and the like cannot use similar food products.

To meet the above requirements, in particular, the target food product must meet the following requirements.

It should be made starting from rice, which is a well available cereal, of low cost, and well tolerated by all persons.

It, moreover, should be made by simple processes and easily available techniques.

It, furthermore, should be suitable for packaging in highly hygienic conditions, thereby preserving all of its organoleptic and nourishing propertied for a long period, without using dangerous preserving substances or low packaging and shipment temperatures, at a very low cost; moreover the food product should not be deteriorated in hot times and climates.

Moreover, the food product should have such a taste and aspect to meet all requirements of possible consumers, and should be satisfactorily tolerated and assimilated.

Rice milk based food products meeting the above requirements are already known, for example, from the US Patents Nos. 4744992 and 4894242, Italian Patent No. 1279533 and EP Patent No. 970614.

However, the food product disclosed in the above mentioned US Patents, have great nutritional lacks, of the order of 3.5% of proteins and fats, bas on the dry fraction thereof, and comprise a vegetable origin base and an animal origin base.

Thus, they cannot be considered suitable for a broad range of world populations and, in particular, for persons allergic to milk or lactose proteins.

Lactose, in particular, even in minimum doses and accordingly tolerable by intolerant persons, could not be however used by allergic persons who cannot tolerate any traces of this component.

Thus, as stated, it would be advantageous to provide a whole rice milk based food product, alternative to animal and soybean milk, comprising rice as the sole component thereof.

In fact, as is well known, rice is the most tolerated digestible and diffused cereal; however it has a very low protein and fat contents much less than that of animal and soybean milk and, accordingly, must be supplemented with protein and fat substances.

Several food combinations, using vegetable proteins, such as soybean pea and carob proteins, with animal milks and related products, i.e. milk serum, have also been provided; however, they have a lot of drawbacks and limitations for a comparatively high portion of possible users, such as intolerance, difficult digestion and so on.

The document EP1198991 discloses reconstituting ingredients separately extracted from rice for the preparation of dairy alternatives.

### SUMMARY OF THE INVENTION

Thus, the aim of the present invention is to provide such a food product specifically designed for overcoming the above mentioned drawbacks, including exclusively, as stated, rice, fractionated by a selective extraction and hydrolysis and then reconstituted, so as to change at will the components thereof.

Within the scope of the above aim, a main object of the invention is to provide a rice-based milk providing all the above mentioned advantages of conventional products, i.e. great contents of proteins and fats, without having their drawbacks.

Another object of the invention ia to provide a rice-based milk which is easily digestible and well tolerated by all consumers.

The above aim and objects are achieved by a method for making a rice product according to claim 1.

### BRIEF DESCRIPTION OF THE DRAWINGS

Further characteristics and advantages of the present invention will become more apparent hereinafter from the following detailed disclosure of a preferred, though not exclusive, embodiment thereof, which is illustrated, by way of an indicative, but not limitative, example, in the accompanying drawings, where:

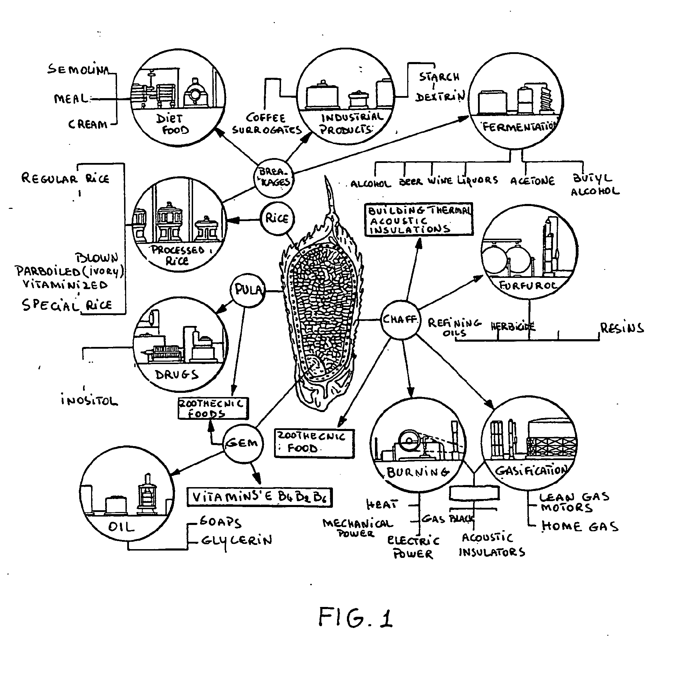

Figure 1 schematically shows several possible applications of rice;
   and

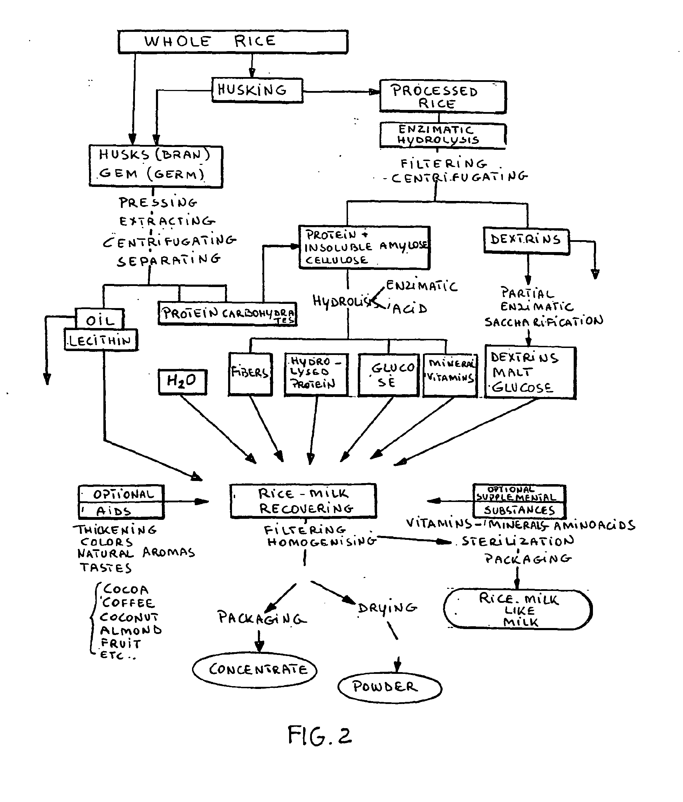

Figure 2 is a flow diagram of a preferred method for making the rice-based food product according to the present invention.

### DESCRIPTION OF THE PREFERRED EMBODIMENTS

The rice-based food product according to the present invention is made starting from whole rice, rice chaff (rice bran) and rice germ, by carrying out a specifically designed processing method, which also constitutes a main aspect of the present invention.

More specifically, starting from whole rice, preliminarily processed by enzymatically transforming it by alpha-amylasis and/or pollulanasis, is then separated into its components through filtering and centrifugating steps, thereby providing two rice components, comprising proteins with insoluble amylose and cellulose and dextrins.

Then, by an enzymatic hydrolisis (using proteasis with glucoamylasis and cellulasis, and/or acid hydrolysis and, separately, fibers, hydrolized proteins, glucose and soluble minerals), and by a partial enzymatic saccharification: dextrins, maltose and glucose, in proportions variable at will, are prepared.

Moreover, also starting from rice husking residues (husks or chaff, + gem/bran + germ), by pressing, centrifugating-extracting and separating, are prepared a fat portion (oil and lecithin) and proteins and carbohydrate residues (starch and cellulose).

Then, said two components are added to proteins with amylose and cellulose, obtained by the above process, and jointly subjected to the same enzymatic and/or acid hydrolysis process.

The thus obtained components (dextrins, glucose, maltose, hydrolyzed proteins, oil, lecithin, hydrolyzed fibers, minerals, vitamins) are finally collected, so as to change at will their rates, for recovering a balanced food product which can be further enriched with optional additives (vitamins, minerals, aminoacids and so on) and/or improved in its aesthetic aspect by technical and optional additives, thickening and coloring agents, natural aromas such as cocoa, mint, coconut, almond, coffee and the like.

The thus obtained product is then subjected to a filtering step and to a homogenizing step, and then, after a suitable thermal processing (pasteurization, UHT or sterilization) it is finally suitably packaged.

If the product is to be preserved in liquid form, then it is also be subjected to a concentrating step (before the end packaging), or to a combined concentrating and drying step; moreover it can also be packaged in powder form, to be successively recovered or reconstituted , at the use time, to a milk or cream form.

In particular, and as stated, the food product according to the invention can be made in several forms, in addition to the milk form, such, for example, rice pudding, rice yoghurt, rice ice cream, the so-called instantaneous mixtures, drinks or beverages, lecithin enriched milk, functional aminoacids, enriched milk and so on.

Lecithin enriched rice milk is a rice based functional food product, such as milk per se, with a minimum amount of 10% of dry fraction in lecithin, obtained by extraction from fat substances of rice bran and germ, preferably at a rate of 20-30% of dry fraction.

Rice whole lecithin contains in average 70% fats, in particular 25% saturated fats and 75% mono and polyunsaturated fats (40% mono-unsaturated and 35% polyunsaturated fats), 14%-15% phosphatydil coline, 2% coline, 1850 mg phosphorus, 220 mg magnesium, per each 100 g.

As known, the above are the most significative and interesting components, owing to their well known effect on the circulatory and brain system.

To the above it is to be added that rice lecithin is added for replacing soybean lecithin, a component which is broadly used for healthy purposes, but which because of a recent OGM pollution, is not appreciated and consumed as in past times.

However. a combination of rice lecithin with its natural support, comprising rice milk, provides a particularly balanced supplementary food product, which is well tolerated and very appreciated because of its natural delicate sweetness.

Said functional aminoacid enriched rice milk is a rice milk based food product, as above disclosed, enriched with one or more aminoacids to fit feeding requirements of infants, sportsmen, sick persons and so on.

### Example 1

The rice protein contains all of the eighteen aminoacids, on which depends a regular human metabolism.

Said rice protein, however, is relatively poor in lysine, cysteine, methyonine, thereby the assimilation of other aminoacids present in greater amounts is also reduced.

A balanced milk product, also with respect to the aminoacid profile, constituting the proteic portion, should require an addition of said aminoacids and possible other mineral and vitaminic aids, for aiding growth and development in a young age, and for sick and old persons.

### Example 2

For meeting particular requirements, in athletically preparating of professional sportsmen and amateur players, their diet is conventionally supplemented by a lot of aiding products, such as hydrolyzed proteins and specific anabolic effect aminoacids, in alternative to drugs and hormones (which are dangerous and prohibited by law).

More specifically, the following aminoacids and optional integrating substances have been found as particularly useful:
acetil-L-carnitine, alanine, arginine, carnitine, isoleucine, leucinic valine, glutamine, monohydrated creatine;
calcium, chromium, iron, magnesium, potassium, zinc, selenium, C vitamine, fat acids, conjugated linoleic acid, phosphatydilserine.

A combination of a rice milk enriched in complex carbohydrates (dextrins) of a slow digestion type, and simple ready energy providing substances (maltose, glucose), with pre-digested hydrolyzed proteins, fat acids, mainly poly and monounsaturated, and optional supplementing substances having an anabolic and antioxidating effect, provides a liquid food product which can be easily used either before, during and after sports event.

It has been found that the invention fully achieves the intended aim and objects.

In fact, it provides a food product prepared starting from rice only, by an extracting and fractioning hydrolysis process, which food product contains all the rice components, i.e. carbohydrates, proteins, fats and some micro nourishing elements such as vitamins, minerals and fibers, with the possibility of changing their rates, depending on contingent needs, to meet all the requirements of the final users.

The thus made products can be used by all the population ranges, such as infants, sportsmen, old and sick persons and so on.

The food product according to the present invention is the first complete food in which all the components have the same origin, (they are divided from a single cereal, the rice, which, as above stated, is easily available, at a low cost and has an optimum tolerability).

Moreover, it should be pointed out that rice does not contains gluten, which could generate a lot of problems for a great number of persons.

From the above it should be apparent that the present invention is based on a novel idea to provide a rice food product, characterized by a general tolerability with well appreciated organoleptic aspects (that is good firmness, taste and nutritional characteristics, providing a milk like food product agreable for any persons).

The inventive food product contains all substances of rice, but in different rates, to meet specific requirements, starting from a whole rice grains which are processed by specifically designed technologies, to recover, after fractionating the parts thereof, a lighter food, of very good digestibility (since it is hydrolyzed), and much more rich (since the several components thereof can be enhanced at will).

This food product, moreover, can be easily used, and has a component ratio which can be changed at will and above a nutritionally correct and complete minimum.

With respect to the beverage field, it should be pointed out that even if conventionally available cereal based drinks and beverages can comprise while cereals, they, however, include mineral proteins and fibers only in trace amounts, since they are not hydrolyzed and are neither soluble nor suspensible, thereby the end result is a suspension/emulsion of dextrines, maltose and glucose, derived from hydrolysis of the rice starch only, in which are lacking fats, which are added in the form of seed oil (safflower, sunflower, or a mixture thereof).

According to the present invention, on the contrary, the inventive process starts from whole rice, and provides to fractionate the components thereof and then recover the fractionated product in selected rates, by industrial processes of a per se known type.

Thus, the invention provides a product which is as far possible similar to original rice, in which, moreover, are used all the rice substances...

Finally, the invention provides a polyvalent product, of natural and complete nature, by a process very similar to a natural process, and this mainly due to enzymatic transformations very similar to the processes the food products are subjected to during normal digestive human processes.

## Claims

1. A method for making a target rice food product comprising exclusively all the components of a starting whole rice material, said components including rice carbohydrates, proteins, fats and micro-nourishing elements such as vitamins, minerals and fibers, said method being **characterized in that** said method comprises the steps of subjecting, said starting whole rice material to an extracting and fractionating hydrolysis process, to provide said rice components in their respective starting rates, said extracting and fractionating hydrolysis process comprising enzymatically transforming said whole rice through said alpha-amylasis and/or pollulanasis thereby providing an enzymetically transformed whole rice product, filtering and centrifugating said enzymatically transformed whole rice product, to provide two composite whole rice derivative products comprising rice proteins with insoluble rice amylose and cellulose, and rice dextrins, said enzymatically transforming comprising enzymatically hydrolyzing said whole rice by using prosteasis with glucoamylasis and cellulasis, and/or acid hydrolysis, said method further including the steps of separately including rice fibers, hydrolyzed proteins, glucose and soluble minerals, further preparing, by a partial enzymatic saccharification, dextrins, maltose and glucose, in variable target rates, providing whole rice husking residues such as whole rice husks + gems / bran + germ, pressing, centrifugally extracting and separating said residues, thereby providing a rice fat portion, such as rice, oil and lecithin and rice proteins and rice residue carbohydrates, such as rice starch and cellulose, adding said rice proteins and rice residue carbohydrates to rice amylase and cellulose, further processing by enzymatic or acid hydrolysis, and jointly collecting said rice dextrins, glucose, maltose, hydrolyzed proteins, oil, lecithin, hydrolyzed fibers, mineral and vitamins, changing the rates of all said rice components and mixing all said components to provide a balanced rice food product to be packaged per se or further enriched by optional supplementary substances such as vitamins, minerals, aminoacids, and so on and/or enhanced in its aesthetic aspect by further adding technical additives, thickening, coloring agents, natural aromas, such as cocoa, mint, coconut, almonds, coffee and the like.

2. A method according to claim 1, **characterized in that** said method further comprises a filtering step, an homogenizing step, a thermal processing step, such as pasteurizing, UHT or sterilization and an end packaging step.

3. A method according to claim 1, **characterized in that** said method further comprises, before said packaging step, a concentrating and drying step, to provide a packaged dry powder to be recovered at a use time.

4. A rice food product comprising exclusively all the rice components of a starting whole rice material in rates changed from the starting rates of said starting whole rice material, and made by a method according to claim 1.

5. A rice food product according to claim 1, **characterized in that** said rice food product comprises at least 1% proteins, based on a whole rice milk per se, and 8% proteins based on whole rice dry substances.

6. A rice food product according to claim 5, **characterized in that** said rice food product comprises 1.5-2% proteins, based on said whole rice milk and 12.5% proteins based on said whole rice dry substances.

7. A rice food product according to claim 5, **characterized in that** said rice food product comprises up to 4% proteins, based on said whole rice milk, and up to 25% proteins based on said whole rice dry substances.

8. A rice food product according to claim 5, **characterized in that** said rice food product has a whole rice fat contents of at least 8% based on said whole rice dry substances, and of 1% based on said whole rice milk.

9. A rice food product according to claim 8, **characterized in that** said rice food product has a whole rice fat contents of 15% based on said whole rice dry substance.

10. A rice food product according to claim 8, **characterized in that** said rice food product has a whole rice fat contents of 15% based on said whole rice dry substance, and of 1.5-2% based on said whole rice milk, at least 80% of said fat contents comprising monounsaturated and polyunsaturated whole rice fats.

11. A rice food product according to claim 4, **characterized in that** said rice food product comprises a residual portion of rice carbohydrates, dextrins, maltose and glucose, in mutually variable rates.

12. A rice food product according to claim 4, **characterized in that** said rice food product comprises added soluble and/or micronized fibers, minerals and aromas.

13. A rice food product according to claim 4, **characterized in that** said rice food product comprises whole rice milk, pudding, yoghurt, ice cream, instantaneous mixtures, drinks and beverages, lecithin enriched milk, and functional aminoacid enriched milk.

## Patentansprüche

1. Verfahren zur Herstellung eines Reisnahrungszielproduktes, umfassend ausschließlich alle Komponenten eines Vollreisausgangsmaterials, wobei die Komponenten Reiskohlenhydrate, Proteine, Fette und Mikro-Nährelemente, wie Vitamine, Mineralien und Fasern, enthalten, wobei das Verfahren **dadurch gekennzeichnet ist, dass** das Verfahren die folgenden Stufen umfasst: Unterziehen des Vollreisausgangsmaterials einem Extraktions- und Fraktionierungshydrolyseprozess, um die Reiskomponenten in ihren jeweiligen Ausgangsraten bereitzustellen, wobei der Extraktions- und Fraktionierungshydrolyseprozess das enzymatische Transformieren des Vollreises durch die Alpha-Amylase und/oder Pollulanase umfasst, wodurch ein enzymatisch transformiertes Vollreisprodukt erhalten wird; Filtern und Zentrifugieren des enzymatisch transformierten Vollreisprodukts, um zwei gemischte Vollreisderivatprodukte bereitzustellen, die Reisproteine mit unlöslicher Reisamylose und Reiszellulose sowie Reisdextrine umfassen, wobei das enzymatische Transformieren die enzymatische Hydrolyse des Vollreises durch Prostease mit Glucoamylase und Zellulase und/oder eine Säurehydrolyse umfasst, wobei das Verfahren des Weiteren die folgenden Schritte umfasst: das separate Einarbeiten von Reisfasern, hydrolysierten Proteinen, Glucose und löslichen Mineralien; des Weiteren das Herstellen, durch eine enzymatische Teilsaccharifikation, von Dextrinen, Maltose und Glucose in variablen Zielraten; das Bereitstellen von Vollreisschalenrückständen, wie Vollreisschalen und -keimen/Kleie und Keimen; das Pressen, zentrifugale Extrahieren und Trennen der Rückstände, wodurch ein Reisfettanteil, wie Reis, Öl und Lecithin und Reisproteine und Reisrückstandskohlenhydrate, wie Reisstärke und Zellulose bereitgestellt werden; das Hinzufügen der Reisproteine und Reisrückstandskohlenhydrate zu Reisamylase und Zellulose; das Weiterverarbeiten durch enzymatische oder Säurehydrolyse; und des gemeinsame Sammeln der Reisdextrine, Glucose, Maltose, hydrolysierten Proteine, des Öls, Lecithins, der hydrolisierten Fasern, Mineralien und Vitamine; das Ändern der Raten aller Reiskomponenten; und das Mischen aller Komponenten, um ein ausgewogenes Reisnahrungsprodukt bereitzustellen, das unverändert verpackt wird oder durch wahlweise Ergänzungssubstanzen, wie Vitamine, Mineralien, Aminosäuren und so weiter angereichert wird, und/oder in seinem ästhetischen Aspekt durch weitere Zugabe von technischen Zusatzstoffen, Verdickungsmitteln, Farbstoffen, natürlichen Aromen, wie Kakao, Minze, Kokosnuss, Mandeln, Kaffee und dergleichen verbessert wird.

2. Verfahren nach Anspruch 1, **dadurch gekennzeichnet, dass** das Verfahren des Weiteren einen Filtrierungsschritt, einen Homogenisierungsschritt, einen Wärmebearbeitungsschritt, wie Pasteurisieren, UHT oder Sterilisieren, und einen abschließenden Verpackungsschritt umfasst.

3. Verfahren nach Anspruch 1, **dadurch gekennzeichnet, dass** das Verfahren des Weiteren vor dem Verpackungsschritt einen Konzentrierungs- und Trocknungsschritt umfasst, um ein verpacktes Trockenpulver bereitzustellen, das zum Zeitpunkt der Verwendung wiederhergestellt wird.

4. Reisnahrungsprodukt, umfassend ausschließlich alle Komponenten eines Vollreisausgangsmaterials in Raten, die gegenüber den Ausgangsraten des Vollreisausgangsmaterials geändert sind, und das durch ein Verfahren nach Anspruch 1 hergestellt wird.

5. Reisnahrungsprodukt nach Anspruch 1, **dadurch gekennzeichnet, dass** das Reisnahrungsprodukt mindestens 1% Proteine, basierend auf der Vollreismilch an sich, und 8% Proteine, basierend auf Vollreistrockensubstanzen enthält.

6. Reisnahrungsprodukt nach Anspruch 5, **dadurch gekennzeichnet, dass** das Reisnahrungsprodukt 1,5 bis 2% Proteine, basierend auf der Vollreismilch, und 12,5% Proteine, basierend auf den Vollreistrockensubstanzen enthält.

7. Reisnahrungsprodukt nach Anspruch 5, **dadurch gekennzeichnet, dass** das Reisnahrungsprodukt bis zu 4% Proteine, basierend auf der Vollreismilch, und bis zu 25% Proteine, basierend auf den Vollreistrockensubstanzen enthält.

8. Reisnahrungsprodukt nach Anspruch 5, **dadurch gekennzeichnet, dass** das Reisnahrungsprodukt einen Vollreisfettgehalt von mindestens 8%, basierend auf den Vollreistrockensubstanzen, und von 1% basierend auf der Vollreismilch aufweist.

9. Reisnahrungsprodukt nach Anspruch 8, **dadurch gekennzeichnet, dass** das Reisnahrungsprodukt einen Vollreisfettgehalt von 15%, basierend auf den Vollreistrockensubstanzen aufweist.

10. Reisnahrungsprodukt nach Anspruch 8, **dadurch gekennzeichnet, dass** das Reisnahrungsprodukt einen Vollreisfettgehalt von 15%, basierend auf den Vollreistrockensubstanzen, und von 1,5 bis 2% basierend auf der Vollreismilch aufweist, wobei mindestens 80% des Fettgehalts monoungesättigte und polyungesättigte Vollreisfette umfassen.

11. Reisnahrungsprodukt nach Anspruch 4, **dadurch gekennzeichnet, dass** das Reisnahrungsprodukt einen Restanteil von Reiskohlenhydraten, Dextrinen, Maltose und Glucose in wechselseitig variablen Raten enthält.

12. Reisnahrungsprodukt nach Anspruch 4, **dadurch gekennzeichnet, dass** das Reisnahrungsprodukt zugesetzte lösliche und/oder mikronisierte Fasern, Mineralien und Aromen umfasst.

13. Reisnahrungsprodukt nach Anspruch 4, **dadurch gekennzeichnet, dass** das Reisnahrungsprodukt Vollreismilch, Pudding, Joghurt, Eiscreme, Instantmischungen, Getränke, mit Lecithin angereicherte Milch und mit funktioneller Aminosäure angereicherte Milch umfasst.

## Revendications

1. Procédé permettant d'élaborer un produit alimentaire à base de riz cible comprenant exclusivement tous les composants d'une matière de départ à base de riz complet, lesdits composants comportant des glucides, des protéines, des lipides et des éléments micronutritifs du riz comme des vitamines, des minéraux et des fibres, ledit procédé étant **caractérisé en ce que** ledit procédé comprend l'étape consistant à soumettre ladite matière de départ à base de riz complet à un procédé d'hydrolyse par extraction et fractionnement, pour fournir lesdits composants à base de riz dans leurs proportions de départ respectives, ledit procédé d'hydrolyse par fractionnement et extraction comprenant la transformation enzymatique dudit riz complet à travers ladite alpha-amylase et/ou pollulanase, fournissant ainsi un produit à base de riz complet transformé de façon enzymatique, le filtrage et la centrifugation dudit produit à base de riz complet transformé de façon enzymatique, pour fournir deux produits dérivés de riz complet composites comprenant des protéines de riz avec de la cellulose et de l'amylose de riz insolubles, et des dextrines de riz, ladite transformation enzymatique comprenant l'hydrolyse enzymatique dudit riz complet en utilisant la protéase avec la glucoamylase et la cellulase, et/ou l'hydrolyse à l'acide, ledit procédé comportant en outre les étapes consistant à inclure séparément des fibres de riz, des protéines hydrolysées, du glucose et des matières solubles, à préparer en outre, par une saccharification enzymatique partielle, des dextrines, du maltose et du glucose, dans des proportions cibles variables, à fournir des résidus de balle de riz complet comme les balles + germes/son + germe de riz complet, à presser, à séparer et extraire par centrifugation lesdits résidus, ce qui permet d'obtenir une partie grasse du riz, comme la lécithine et l'huile de riz, et des protéines de riz ainsi que des glucides résiduels de riz, comme la cellulose et l'amidon du riz, à ajouter lesdites protéines de riz et lesdits glucides de résidus de riz à la cellulose et l'amylase de riz, à les traiter en outre par hydrolyse à l'acide ou enzymatique et à récupérer de façon conjointe lesdites dextrines de riz, le glucose, le maltose, les protéines hydrolysées, l'huile, la lécithine, les fibres hydrolysées, les minéraux et les vitamines, à modifier les proportions de tous lesdits composants à base de riz et à mélanger tous lesdits composants pour fournir un produit alimentaire à base de riz équilibré à emballer tel quel ou enrichi encore par des substances complémentaires facultatives comme des vitamines, des minéraux, des acides aminés etc., et/ou amélioré en termes d'esthétique en ajoutant des additifs techniques, des épaississants, des agents colorants, des arômes naturels, comme du cacao, de la menthe, de la noix de coco, des amandes, du café et similaires.

2. Procédé selon la revendication 1, **caractérisé en ce que** ledit procédé comprend en outre une étape de filtrage, une étape d'homogénéisation, une étape de traitement thermique, comme la pasteurisation, le traitement à ultra haute température ou la stérilisation, et une étape d'emballage finale.

3. Procédé selon la revendication 1, **caractérisé en ce que** ledit procédé comprend en outre, avant ladite étape d'emballage, une étape de concentration et de séchage, pour fournir une poudre sèche emballée pouvant être récupérée pour une utilisation ultérieure.

4. Produit alimentaire à base de riz comprenant exclusivement tous les composants de riz d'une matière à base de riz complet de départ dans des proportions modifiées par rapport aux proportions de départ de ladite matière de départ à base de riz complet, et élaboré par un procédé selon la revendication 1.

5. Produit alimentaire à base de riz selon la revendication 1, **caractérisé en ce que** ledit produit alimentaire à base de riz comprend au moins 1 % de protéines, sur la base d'un lait de riz complet, et 8 % de protéines sur la base des substances sèches du riz complet.

6. Produit alimentaire à base de riz selon la revendication 5, **caractérisé en ce que** ledit produit alimentaire à base de riz comprend 1,5 à 2 % de protéines sur la base dudit lait de riz complet et 12,5 % de protéines sur la base desdites substances sèches dé riz complet.

7. Produit alimentaire à base de riz selon la revendication 5, **caractérisé en ce que** ledit produit alimentaire à base de riz comprend jusqu'à 4 % de protéines, sur la base dudit lait de riz complet, et jusqu'à 25 % de protéines sur la base desdites substances sèches de riz complet.

8. Produit alimentaire à base de riz selon la revendication 5, **caractérisé en ce que** ledit produit alimentaire à base de riz possède une teneur en lipides de riz complet d'au moins 8 % sur la base desdites substances sèches de riz complet et de 1 % sur la base dudit lait de riz complet.

9. Produit alimentaire à base de riz selon la revendication 8, **caractérisé en ce que** ledit produit alimentaire à base de riz possède une teneur en lipides de riz complet de 15 % sur la base de ladite substance sèche de riz complet.

10. Produit alimentaire à base de riz selon la revendication 8, **caractérisé en ce que** ledit produit alimentaire à base de riz possède une teneur en lipides de riz complet de 15 % sur la base de ladite substance sèche de riz complet, et de 1,5 à 2 % sur la base dudit lait de riz complet, au moins 80 % de ladite teneur en lipides comprenant des lipides de riz complet monoinsaturés et polyinsaturés.

11. Produit alimentaire à base de riz selon la revendication 4, **caractérisé en ce que** ledit produit alimentaire à base de riz comprend une partie résiduelle de glucides, dextrines, maltose et glucose de riz, dans des proportions mutuellement variables.

12. Produit alimentaire à base de riz selon la revendication 4, **caractérisé en ce que** ledit produit alimentaire à base de riz comprend des fibres solubles et/ou micronisées, des minéraux et des arômes.

13. Produit alimentaire à base de riz selon la revendication 4, **caractérisé en ce que** ledit produit alimentaire à base de riz comprend du lait de riz complet, des flans, des yaourts, des crèmes glacées, des mélanges et des boissons instantanés, du lait enrichi en lécithine et du lait enrichi en acides aminés fonctionnels.
